# EUROPÄISCHE PATENTSCHRIFT

(11) **EP 0 456 874 B1**
(45) Veröffentlichungstag und Bekanntmachung des Hinweises auf die Patenterteilung: **27.07.1994**
(21) Anmeldenummer: 90109494.6
(22) Anmeldetag: 18.05.1990
(51) Int. Cl.: H02H 7/093, H02H 5/04

(54) **Überlastungsschutz für die Wicklung eines durch eine Drehzahlerfassungsvorrichtung überwachten DC-Reihenschlussmotors**
Overload protection for the winding of a DC-series-motor, monitored by a rotational speed measuring device
Protection contre la surcharge d'un bobinage d'un moteur série à courant continu, surveillé par un dispositif de mesure de la vitesse de rotation

(43) Veröffentlichungstag der Anmeldung: 21.11.1991
(73) Patentinhaber: SIEMENS AKTIENGESELLSCHAFT, 80333 München (DE); AKO-Werke GmbH & Co, D-7988 Wangen/Allgäu (DE)
(72) Erfinder: Klein, Hans-Wilhelm, Dipl.-Ing., D-8700 Würzburg (DE); Albicker, Fritz, Dipl.-Ing. (FH), D-7988 Wangen-Haslach (DE); Simon, Helmut, Dipl.-Ing., D-7989 Argenbühl (DE)
(74) Vertreter: Fuchs, Franz-Josef, Dr.-Ing.

(56) Entgegenhaltungen:
- FR-A- 2 177 706
- GB-A- 1 363 738

## Beschreibung

Die Erfindung bezieht sich auf einen Waschgeräteantrieb mit einem durch eine Drehzahlerfassungsvorrichtung überwachten DC-Reihenschlußmotors gemäß Oberbegriff des Anspruchs 1; ein derartiger Waschgeräteantrieb ist durch offenkundige Vorbenutzung allgemein bekannt.

Bei dem bekannten Überlastungsschutz wird ein Thermoschalter eingesetzt, dessen bimetallbetätigte Kontakte bei Erreichen einer Grenztemperatur einen angeschlossenen Stromkreis, insbesondere den Motorstromkreis, unterbrechen. Um die jeweilige Wicklungstemperatur möglichst genau und verzögerungsfrei erfassen bzw. überwachen zu können, ist man bestrebt, Thermoschalter möglichst kleiner Baugröße einzusetzen, die problemlos in die Ständerwicklung des DC-Reihenschlußmotors einbaubar sind. Der somit bedingte kleinvolumige Aufbau des Thermoschalters läßt aufgrund seiner geringen Kontaktabstände und der relativ langsamen Schaltgeschwindigkeit bei Spannungsamplituden von z.B. 220 V ein sicheres Schalten nur bei Speisung mit Wechselspannung zu.

Bei Speisung mit Gleichspannung besteht die Gefahr, daß infolge des auftretenden Lichtbogens kein sicheres Abschalten bei geöffneten Kontakten im Falle einer Übertemperatur erfolgt; im bekannten Fall ist daher der Thermoschalter auf der Wechselspannungsseite der Regel- bzw. Steuervorrichtung für den drehzahlgeregelten DC-Reihenschlußmotor angeordnet.

Von der Drehzahlsteuer- bzw. Drehzahlregelvorrichtung wird gleichzeitig auch die Funktionsfähigkeit einer Drehzahlerfassungsvorrichtung überwacht, die die Ist-Werte der jeweils augenblicklichen Drehzahl des DC-Reihenschlußmotors liefert. Wird ein Fehler im Antrieb, wie z.B. eine Leitungsunterbrechung oder ein Kurzschluß, erkannt, so erfolgt augenblicklich ein Stillsetzen des Motors über das Drehzahlstellglied.

Durch die GB-A-1 363 738 bzw. die DE-A-22 43 105 ist zur Überwachung eines eingeengten Drehzahlverhaltens und zum gleichzeitigen thermischen Schutz eines Induktionsmotors eine Schaltungsanordnung bekannt, bei der ein in seinem Entladezustand von einem Steuertransistor beeinflußbares RC-Glied mit einer nachgeschalteten Z-Diode und einem von deren Schwellwert abhängigen Arbeitskreis mit Steuerorganen für voneinander unabhängige Sekundärstromkreise und im Basis-Emitterkreis des Steuertransistors ein Empfänger eines rotordrehzahlabhänigen induktiven Gebers sowie im Kollektorkreis des Steuertransistors sich ein von der Motorinnentemperatur abhängiger PTC-Widerstand vorgesehen sind.

Gemäß Aufgabe vorliegender Erfindung soll bei voll gewährleistetem Überlastungsschutz für die Wicklung des DC-Reihenschlußmotors der eingangs genannten Art die Wicklungsüberwachung mit wesentlich geringerem baulichen und fertigungstechnischen Aufwand erreicht werden; die Lösung dieser Aufgabe ist dadurch möglich, daß der Thermoschalter in Reihe zu der Drehzahlerfassungsvorrichtung, die nach einer Ausgestaltung der Erfindung aus einem Tachogenerator besteht, angeschlossen ist.

Ist ein Überlastungsschutz mit einer Drehzahlerfassungsvorrichtung, bestehend aus einem rotorseitigen Magnet-Polrad und einem statorseitigen Hallsensor mit digitalem Ausgang, vorgesehen, so ist in vorteilhafter Weise der Thermoschalter in die Ausgangsleitung (Out) des Hallsensors eingeschaltet.

Bei dem erfindungsgemäßen Überlastungsschutz kann in vorteilhafter Weise der Thermoschalter nunmehr für die wesentlich kleineren Strom- bzw. Spannungsverhältnisse des Signals der Drehzahlerfassungsvorrichtung ausgelegt werden. In insbesondere vorteilhafter Weise für einen Waschgeräteantrieb, bei dem aus thermischen und isolationstechnischen Gründen die Drehzahlsteuer- bzw. Drehzahlregeleinrichtung mit dem Gleichrichter und dem Drehzahlstellglied nicht am Motor angebaut ist, können zwei zusätzlich vorzusehende und zu verlegende Anschlußleitungen eingespart werden, die im bekannten Fall zur Versorgung des wechselstromseitig angeordneten Thermoschalters notwendig sind.

Wird als Thermoschalter ein PTC-Widerstand mit ausgeprägtem Temperaturverhalten verwendet, so sind durch eine entsprechende Auswerteschaltung auch andere, von zunächst zu erfassenden Übertemperatur verschiedene Betriebstemperaturen des Motors überwachbar, so daß auf einfache Weise ohne zusätzliche Leitungen ein Temperatursensor für eine temperaturgeregelte Einschaltdauer des Motors möglich ist.

Durch gleichzeitige Anordnung des Thermoschalters bzw. Thermosensors in thermischem Kontakt nicht nur zur Wicklung sondern auch zum Bürstenhalter des DC-Reihenschlußmotors ist in vorteilhafter Weise auch ein Schutz gegen Übertemperatur-Beanspruchungen der Bürstenapparatur möglich.

Die Erfindung sowie weitere vorteilhafte Ausgestaltungen der Erfindung werden im folgenden anhand zweier schematisch dargestellter Ausführungsbeispiele näher erläutert; darin zeigen:
- FIG 1: ein Prinzipschaltbild eines DC-Reihenschlußmotors für einen Waschgeräteantrieb mit einem Tachogenerator zur Drehzahlerfassung bzw. Drehzahlüberwachung,
- FIG 2: in einem Teilausschnitt der Schaltung gemäß FIG 1 die Drehzahlerfassung und Drehzahlüberwachung mit einem rotorseitigen Magnet-Polrad und einem statorseitigen Hallsensor.

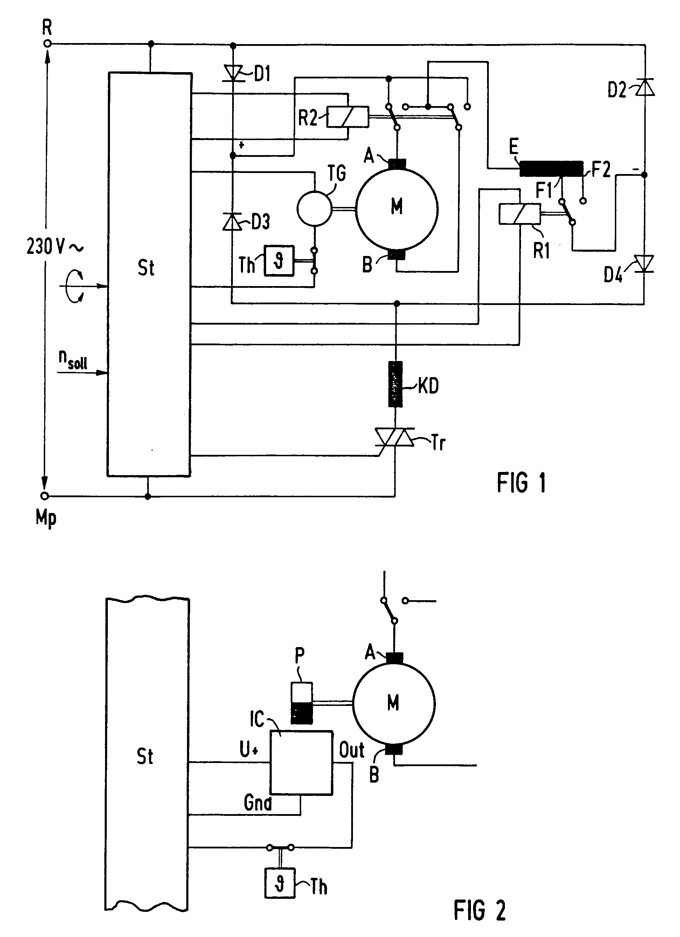

FIG 1 zeigt einen aus einem Einphasenwechselstromnetz R, Mₚ über eine Steuervorrichtung St und eine Triac-Halbleiterschaltung Tr über eine Kommutierungsdrossel KD gespeisten, in einer Gleichrichterbrückenschaltung D1 - D4 angeordneten, für einen Waschgeräteantrieb vorgesehenen DC-Reihenschlußmotor M mit einer Ankerwicklung A-B und einer damit in Reihe liegenden, mit einer Wicklungsanzapfung versehenen Erregerwicklung E;F1,F2. Zur unterschiedlichen Wicklungsanzapfung der Erregerwicklung ist ein von der Steuervorrichtung St bedienbares Relais R1 und für die Drehrichtungsumkehr ein ebenfalls von der Steuervorrichtung St steuerabhängiges Relais R2 vorgesehen. Der Steuervorrichtung St werden als wesentliche Sollwerte eine bestimmte Drehrichtung und eine bestimmte Drehzahl nₛₒₗₗ vorgegeben.

Zur Drehzahlerfassung und Drehzahlüberwachung dient ein mit der Rotorwelle des DC-Reihenschlußmotors M drehabhängiger Tachogenerator TG, der derart in Steuerabhängigkeit mit der Steuervorrichtung St steht, daß bei irgendeiner durch den Tachogenerator TG angezeigten Betriebsstörung die Steuervorrichtung St den Antrieb abschaltet.

Erfindungsgemäß ist nunmehr in den Stromkreis des Tachogenerators TG mit der Steuervorrichtung St ein Thermoschalter Th derart eingeschaltet, daß der Tachokreis bei Ansprechen des Thermoschalters Th unterbrochen und damit über die Steuervorrichtung St auch der gesamte Antrieb außer Betrieb gesetzt wird.

FIG 2 zeigt in Alternative zu FIG 1 anstelle des die Drehzahl erfassenden bzw. die Drehzahl überwachenden Tachogenerators TG ein mit der Rotorwelle des DC-Reihenschlußmotors M drehabhängig gekuppeltes Magnet-Polrad P und einen diesem zugeordneten statorseitigen Hallsensor IC, der drehzahlproportionale Signale an die Steuervorrichtung St abgibt. Erfindungsgemäß ist in die Ausgangsleitung Out des Hallsensors IC wiederum ein Thermoschalter derart eingeschaltet, daß bei Ansprechen des Thermoschalters die Ausgangsleitung unterbrochen und dementsprechend über die Steuervorrichtung St der gesamte Abtrieb abgeschaltet wird.

## Patentansprüche

1. Waschgerätantrieb mit einem durch eine Drehzahlerfassungsvorrichtung (Tachogenerator TG) über eine nachgeschaltete Drehzahlsteuer- bzw. Drehzahlregelvorrichtung (St) überwachten DC-Reihenschlußmotor (M) und einem die Wicklungstemperatur des DC-Reihenschlußmotors (M) überwachenden Thermoschalter (Th), **dadurch gekennzeichnet,** daß der Thermoschalter (Th) als Unterbrechungsschalter in Reihe zu der Drehzahlerfassungsvorrichtung (Tachogenerator TG) in deren Zuleitung zu der Drehzahlsteuer- bzw. Drehzahlregelvorrichtung (St) angeordnet ist.

2. Waschgerätantrieb mit einer Drehzahlerfassungsvorrichtung, bestehend aus einem rotorseitigen Magnet-Polrad (P) und einem statorseitigen Hallsensor (IC) mit digitalem Ausgang nach Anspruch 1, **dadurch gekennzeichnet,** daß der Thermoschalter (Th) als Unterbrechungsschalter in die Ausgangsleitung des Hallsensors (IC) zu der Drehzahlsteuer- bzw. Drehzahlregelvorrichtung (St) angeordnet ist.

3. Waschgerätantrieb nach Anspruch 1 und/oder 2, **dadurch gekennzeichnet,** daß als Thermoschalter (Th) ein PTC-Widerstand vorgesehen ist.

4. Waschgerätantrieb nach einem der Ansprüche 1 - 3, **dadurch gekennzeichnet,** daß der Thermoschalter (Th) in engem thermischen Kontakt zur Wicklung des DC-Reihenschlußmotors (M) angeordnet ist.

5. Waschgerätantrieb nach einem de Ansprüche 1 - 4, **dadurch gekennzeichnet,** daß der Thermoschalter (Th) in engem thermischen Kontakt zur Bürstenhalterung des DC-Reihenschlußmotors (M) angeordnet ist.

## Claims

1. Washing appliance drive with a DC series-wound motor (M), which is monitored by a speed detection device (tachogenerator TG) via a speed control or speed regulating device (St), which is connected downstream, and a thermal cut-out (Th), which monitors the winding temperature of the DC series-wound motor (M), characterised in that the thermal cut-out (Th) is arranged as an interrupter switch in series with the speed detection device (tachogenerator TG) in the latter's supply line to the speed control or speed regulating device (St).

2. Washing appliance drive with a speed detection device consisting of a magnetic pole spider (P) on the rotor side and a Hall effect sensor (IC) on the stator side with a digital output, characterised in that the thermal cut-out (Th) is arranged as an interrupter switch in the output line of the Hall effect sensor (IC) to the speed control or speed regulating device (St).

3. Washing appliance drive according to claim 1 and/or 2, characterised in that a PTC resistor is provided as the thermal cut-out (Th).

4. Washing appliance drive according to one of claims 1 - 3, characterised in that the thermal cut-out (Th) is arranged in close thermal contact with the winding of the DC series- wound motor (M).

5. Washing appliance drive according to one of claims 1 - 4, characterised in that the thermal cut-out (Th) is arranged in close thermal contact with the brush holder of the DC series-wound motor (M).

## Revendications

1. Dispositif d'entraînement de machine à laver comportant un moteur série à courant continu surveillé par un dispositif capteur de vitesse de rotation (génératrice tachymétrique TG), par l'intermédiaire d'un dispositif (St) de commande de vitesse de rotation, ou de réglage de vitesse de rotation, monté en aval, et un commutateur thermique (Th) surveillant la température des bobinages du moteur série à courant continu (M), caractérisé en ce que le commutateur thermique (Th) est monté en tant qu'interrupteur, en série avec le dispositif capteur de vitesse de rotation (génératrice tachymétrique TG) dans la ligne de celui-ci menant au dispositif de commande de vitesse de rotation, ou de réglage de la vitesse de rotation.

2. Dispositif d'entraînement de machine à laver comportant un dispositif capteur de vitesse de rotation, constitué d'une roue (P), comportant des pôles magnétiques située côté rotor et d'un capteur à effet Hall (IC) situé côté stator, comportant une sortie numérique selon la revendication 1, caractérisé en ce que le commutateur thermique (Th) est disposé en tant qu'interrupteur dans le conducteur de sortie du capteur (IC) à effet Hall, menant au dispositif (ST) de commande de vitesse de rotation, ou de réglage de vitesse de rotation.

3. Dispositif d'entraînement de machine à laver selon la revendication 1 et/ou 2, caractérisé en ce qu'une résistance à coefficient de température positif est prévue en tant que commutateur thermique (Th).

4. Dispositif d'entraînement de machine à laver selon l'une des revendications 1 à 3, caractérisé en ce que le commutateur thermique (Th) est disposé en contact thermique étroit avec le bobinage du moteur série à courant continu (M).

5. Dispositif d'entraînement de machine à laver selon l'une des revendications 1 à 4, caractérisé en ce que le commutateur thermique (Th) est monté de façon à être en contact thermique étroit avec le dispositif de support de balais du moteur série à courant continu (M).
